# EUROPEAN PATENT APPLICATION

(11) **EP 4 794 061 A1**
(43) Date of publication of application: **19.08.2026**
(21) Application number: 25867214.6
(22) Date of filing: 27.10.2025
(51) Int. Cl.: H01M 10/6556, H01M 50/367, H01M 10/613, H01M 10/6567, H01M 50/204

(54) **BATTERY SYSTEM**

(30) Priority: 17.12.2024 KR 20240188698
(71) Applicant: LG ENERGY SOLUTION, LTD., Seoul 07335 (KR)
(72) Inventor: AHN, Moon Youl, Daejeon 34122 (KR)
(74) Representative: Plasseraud IP
(86) International application number: PCT/KR2025/017218
(87) International publication number: WO 2026/134621

(57) **Abstract**

According to exemplary embodiments of the present disclosure, there is provided a battery system. The battery system includes: a battery pack having a cooling flow path at an upper part and a venting passage at a lower part; and a battery pack stack in which a plurality of the battery packs are stacked vertically. Such a battery system can efficiently cool and then discharge high-temperature flammable gas, thereby preventing thermal runaway and thermal propagation between battery modules or between battery packs.

## Description

### [Technical Field]

The present disclosure relates to a battery system, and more particularly, to a battery system that simplifies a structure by integrating a cooling flow path and a venting passage of a battery pack. This application claims the benefit of Korean Patent Application No. 10-2024-0188698, filed on December 17, 2024, the disclosure of which is incorporated herein by reference.

### [Background]

As technology development and demand for mobile devices, electric vehicles, and the like increase, demand for secondary batteries as energy sources is rapidly increasing. A secondary battery is a battery that can be repeatedly charged and discharged, and a battery pack is installed in an electric vehicle or the like by mounting a plurality of battery modules, each of which is formed by accommodating a plurality of battery cells in a module frame.

Recently, in order to increase the energy density of a battery pack, battery packs of a Cell To Pack (CTP) type have been developed, in which battery modules are omitted and battery cells are installed directly in a battery pack case to configure the battery pack.

A battery pack may expose battery cells in the battery pack to heat or flame due to charging and discharging processes or external impact. When such an event occurs, heat or flame generated in one battery cell may propagate to adjacent battery cells, causing a thermal runaway phenomenon, and the battery pack may lead to a chain explosion.

In order to effectively respond to thermal runaway in a battery pack, various cooling technologies and gas venting technologies are applied to the battery pack. However, in the case of conventional battery packs, venting design technology is insufficient, so venting gas generated by thermal runaway cannot be appropriately isolated, guided, and discharged, and thus there is a limitation in delaying thermal propagation to an adjacent bank or an adjacent module.

### [Prior art document]

Korean Patent Publication No. 10-2024-0144841 (Publication Date: 2024.10.04)

### [Summary]

### [Technical Problem]

In order to solve the problems of the prior art, an object of the present disclosure is to provide a battery system having a stacked structure in which a cooling system and a safety ventilation system of a battery pack are integrated.

### [Technical Solution]

According to exemplary embodiments of the present disclosure for achieving the above-described object, there is provided a battery system in which a cooling system and a safety ventilation system are integrated.

The battery system includes: a battery pack having a cooling flow path at an upper part and a venting passage at a lower part; and a battery pack stack in which a plurality of the battery packs are stacked vertically.

In the battery system, the battery pack includes: a battery module comprising a plurality of battery cells; and a pack housing in which the battery module is accommodated.

In the battery system, the battery module includes the plurality of battery cells and a module frame accommodating the plurality of battery cells.

In the battery system, a venting cut line may be further provided on a bottom surface of the module frame.

In the battery system, the pack housing may include: a base plate located on a bottom of the pack housing and having a plurality of venting slots; side plates assembled to both ends of the base plate; and end plates assembled to the other both ends of the base plate to form a predetermined space together with the side plates.

In the battery system, the pack housing may include: an upper cover plate located at an upper end of the pack housing to cover the battery module; and a venting channel plate located at a lower part of the pack housing.

In the battery system, the cooling flow path may be formed in the upper cover plate.

In the battery system, the cooling flow path may be connected to a refrigerant inlet and an outlet on an outside of the end plates.

In the battery system, the venting channel plate may have a plurality of opening parts communicating with the venting slots of the base plate.

In the battery system, the venting passage may include: a plurality of connecting venting passages formed on one side of the base plate; an internal venting passage of a side plate located at the plurality of connecting venting passages; an internal venting passage of an end plate connected to the side plate; and a venting device communicating with an internal venting passage of a side plate located at the other side end of the base plate.

In the battery system, the venting passage may be formed on the base plate.

In the battery system, in the battery pack stack, a venting passage of an upper battery pack may contact a cooling flow path of a lower battery pack adjacent directly below.

In the battery system, in the battery pack stack, a venting channel plate of an upper battery pack may contact an upper cover plate of a lower battery pack adjacent directly below.

In the battery system, in the battery pack stack, a lower plate may be disposed on a lowermost battery pack.

In the battery system, the base plate may be thinner than the lower plate.

### [Advantageous Effects]

The battery system according to exemplary embodiments of the present disclosure can provide a plurality of battery packs having a simplified structure by applying an integrated cooling system and safety ventilation system.

In addition, the battery system can efficiently cool and then discharge high-temperature flammable gas, thereby preventing thermal runaway and thermal propagation between battery modules or between battery packs.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view of a battery pack according to an exemplary embodiment of the present disclosure.
FIG. 2 shows a state in which an upper cover plate is removed from the battery pack of FIG. 1.
FIG. 3 shows a state in which a battery module is taken out from the battery pack of FIG. 2.
FIG. 4 is a perspective view of one battery module of FIG. 3.
FIG. 5 is an exploded perspective view of the battery module of FIG. 4.
FIG. 6 is a plan view showing a state in which a battery cell assembly is taken out from the battery pack of FIG. 2.
FIG. 7 is a plan view showing a venting passage in the battery pack.
FIG. 8 is an exploded perspective view of the pack housing of FIG. 3, and three-dimensionally shows gas flow in the venting passage of FIG. 7.

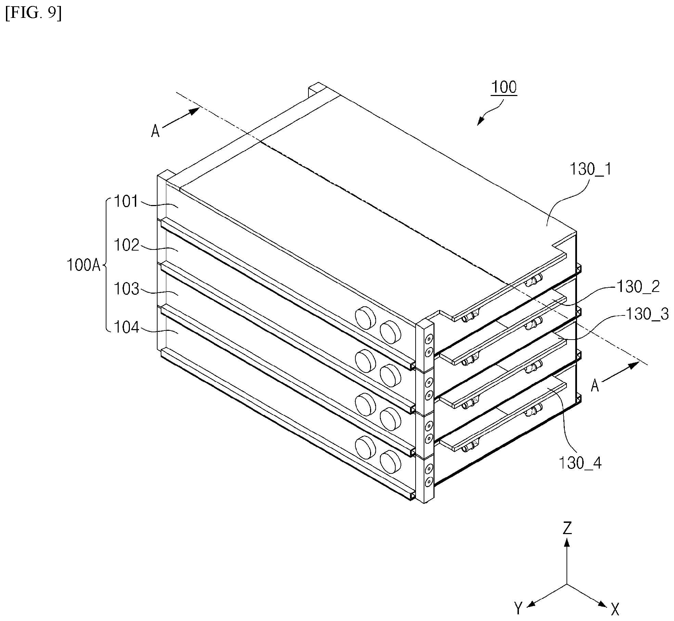

FIG. 9 is a perspective view of a battery system in which a plurality of battery packs of FIG. 1 are stacked.

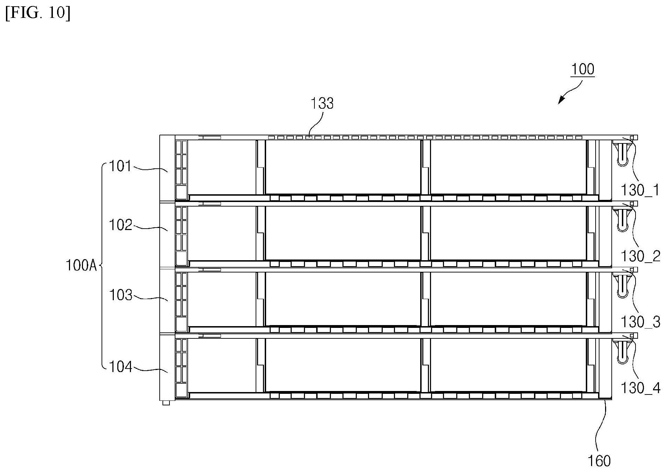

FIG. 10 is a front cross-sectional view taken along line A-A of FIG. 9.
FIG. 11 is a perspective view of another battery system in which a plurality of battery packs of FIG. 1 are stacked, as viewed from another direction.
   FIG. 12a is a perspective view taken along line B-B of FIG. 11, and FIG. 12b is an enlarged view of portion A of FIG. 12a.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First Embodiment)

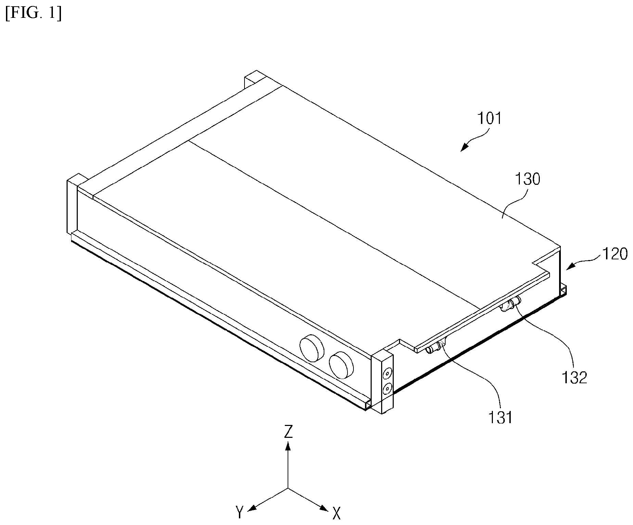

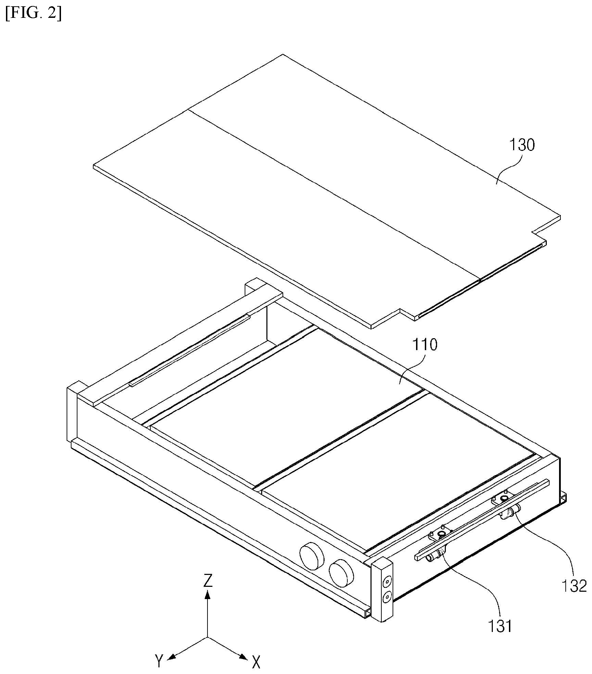

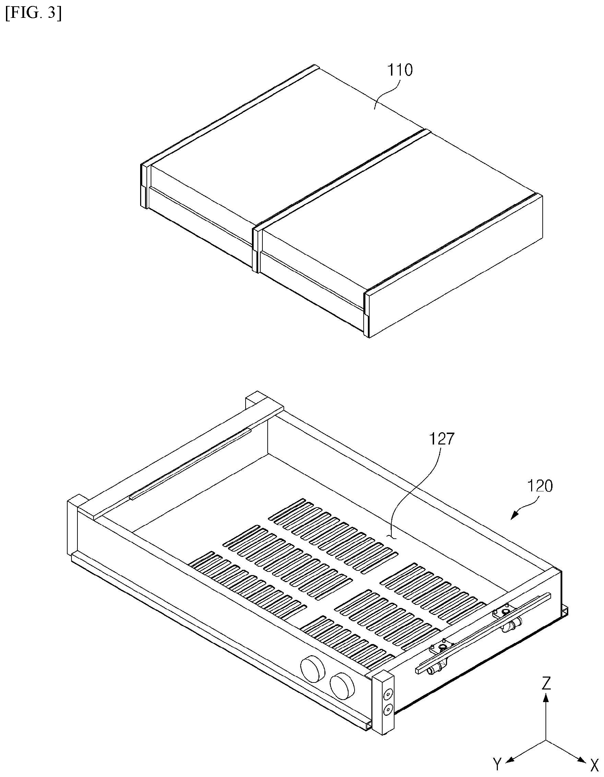

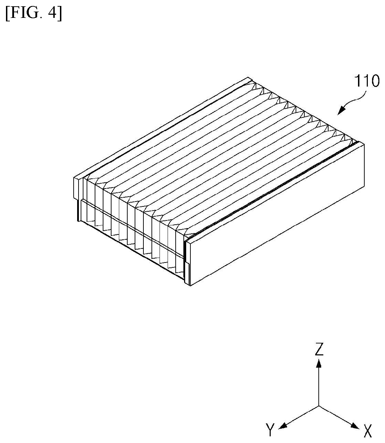

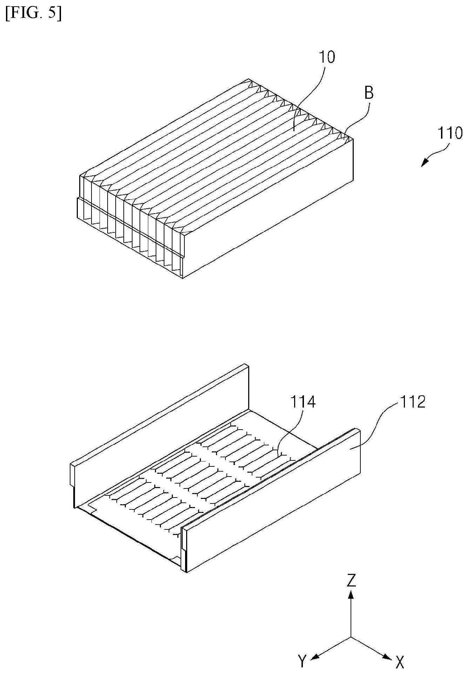

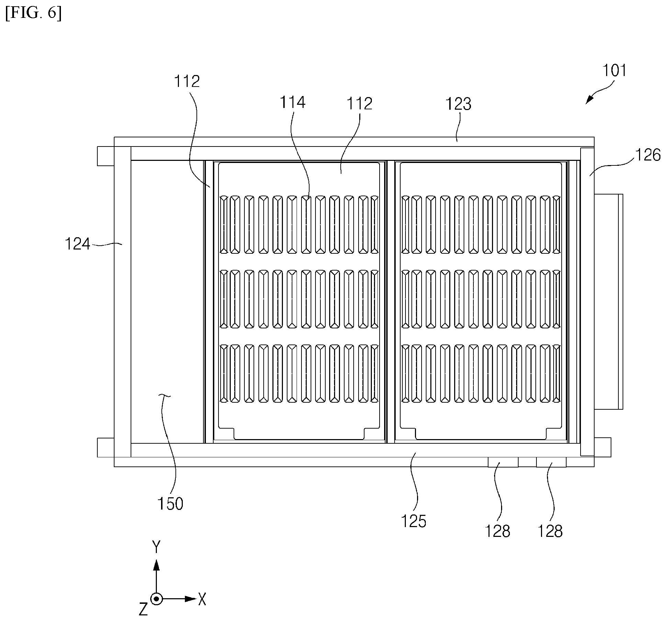

FIG. 1 is a perspective view of a battery pack according to an exemplary embodiment of the present disclosure, FIG. 2 shows a state in which an upper cover plate is removed from the battery pack of FIG. 1, and FIG. 3 shows a state in which a battery module is taken out from the battery pack of FIG. 2. FIG. 4 is a perspective view of one battery module of FIG. 3, FIG. 5 is an exploded perspective view of the battery module of FIG. 4, and FIG. 6 is a plan view showing a state in which a battery cell assembly is taken out from the battery pack of FIG. 2.

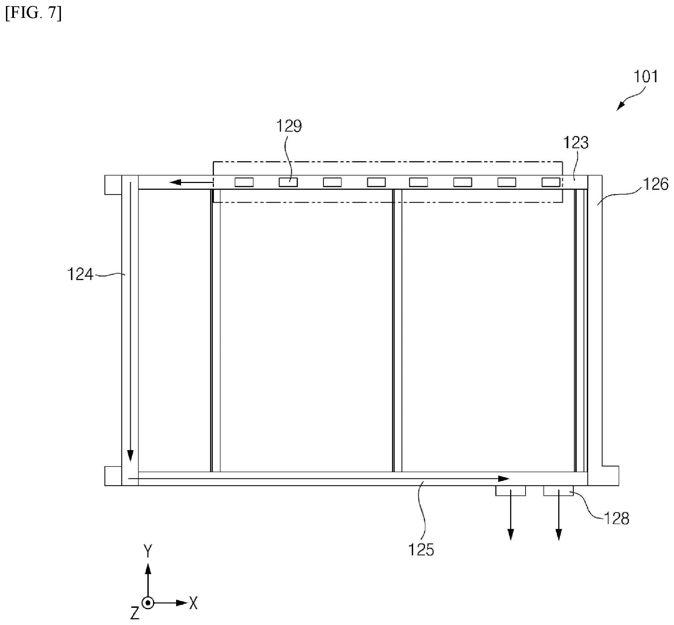

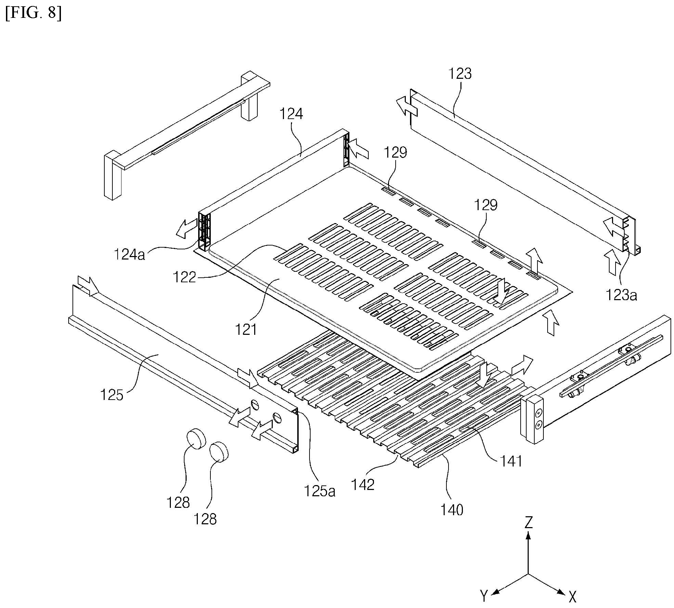

FIG. 7 is a plan view showing a venting passage in the battery pack, and FIG. 8 is an exploded perspective view of the pack housing of FIG. 3, and three-dimensionally shows gas flow in the venting passage of FIG. 7.

Referring to FIGS. 1 to 8, the battery pack 101 according to the present embodiment includes a battery module 110 including a plurality of battery cells B, and a pack housing 120 in which the battery module 110 is stored.

The battery module 110 includes a plurality of battery cells B and a module frame 112 storing the plurality of battery cells B. The module frame 112 may accommodate the plurality of battery cells B in the form of a battery cell assembly 10 in which the plurality of battery cells B are stacked or assembled and arranged in one direction.

The battery cell assembly 10 may include a plurality of battery cells B. Each battery cell B is a lithium ion battery, that is, a basic unit of a secondary battery. Each battery cell B may include an electrode assembly, an electrolyte, and a cell case. The electrode assembly provided in the cell case may include a positive electrode, a negative electrode, and a separator interposed between the positive electrode and the negative electrode. The electrode assembly may be any one of a jelly-roll type and a stack-type depending on an assembled form. The jelly-roll type electrode assembly may include a wound structure of a positive electrode, a negative electrode, and a separator interposed therebetween. The stack-type electrode assembly may include a plurality of positive electrodes, a plurality of negative electrodes, and a plurality of separators interposed therebetween, sequentially stacked. The positive electrode may include a positive electrode current collector and a positive electrode active material. The negative electrode may include a negative electrode current collector and a negative electrode active material.

The plurality of battery cells B may be connected in series and/or in parallel. As an example, the plurality of battery cells B may be connected to each other in series. As an example, the plurality of battery cells B may be connected to each other in parallel. As an example, when a set of two or more battery cells B connected in parallel is defined as a bank, one bank composed of two or more battery cells B connected in parallel and another bank composed of two or more battery cells B connected in parallel may be connected in series.

Each battery cell B may correspond to a pouch-type battery cell, a cylindrical battery cell, or a prismatic battery cell. An electrode assembly of the pouch-type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can.

In the present embodiment, the battery cell B may be a pouch-type battery cell. The pouch-type battery cell may be formed by storing an electrode assembly in a pouch case of a laminate sheet including a resin layer and a metal layer, and then bonding an outer peripheral portion of the pouch case. Such a battery cell B may be formed in a rectangular sheet structure.

The battery cell B has a structure in which two electrode leads protrude from one end and the other end of a battery body while facing each other. The battery cell B may be manufactured by bonding both ends of a battery case and one side part connecting them in a state in which an electrode assembly is stored in the battery case. The battery cell B may be a unidirectional battery cell in which two electrode leads protrude in the same direction.

The battery cell B may be configured in plurality, and may be assembled to be electrically connected to each other to form the battery cell assembly 10. The battery cell assembly 10 may have a plurality of battery cells B disposed along a direction parallel to the Y-axis (a thickness direction of the battery cell).

The module frame 112 stores the battery cell assembly 10, and a venting cut line 114 may be provided on a bottom surface of the module frame 112. The module frame 112 may also be a module housing storing the battery cell assembly 10. In this case, the module housing may have a structure in which all four surfaces are surrounded by plates in the module frame. The module frame or the module housing may further include a cover plate at an upper part.

The pack housing 120 includes a base plate 121, side plates 123, 125, and end plates 124, 126.

The base plate 121 is located at a bottom of the pack housing 120 and has a plurality of venting slots 122. The base plate 121 is disposed to face a bottom surface of the module frame 112 and may at least partially cover the bottom surface of the module frame 112.

The base plate 121 may be coupled to lower end parts of each of two side plates 123, 125 disposed on both sides of the pack housing 120. For example, one side part of the base plate 121 may be coupled to a lower end part of a first side plate 123 by welding, and the other side part of the base plate 130 may be coupled to a lower end part of a second side plate 125 by welding.

The base plate 121 may include venting slots 122 for exhausting high-temperature gas originating from the battery cell assembly 10 to a space below the battery module 110. The plurality of venting slots 122 may be arranged in an X direction and a Y direction on the base plate 121. Each of the plurality of venting slots 122 may be a rectangular slot formed to be long in the Y direction. The venting slots 122 may correspond to the venting cut line 114 formed on the bottom surface of the module frame 112.

In addition, on one side of the base plate 121, a plurality of connecting venting passages 129 may be provided to allow gas existing at the lower part of the base plate 121 to pass into the inside of the side plate 123 (see the arrow in FIG. 8).

In each of the side plates 123, 125, internal venting passages 123a, 125a through which high-temperature gas can pass may be formed. For example, a plurality of venting passages 123a may be formed inside the first side plate 123, and a plurality of venting passages 125a may also be formed inside the second side plate 125. In addition, on one side of the second side plate 125, a venting device 128 for discharging gas to the outside may be provided.

The end plates 124, 126 may be located at both side ends of the base plate 121. Each of the end plates 124, 126 includes a first end plate 124 and a second end plate 126. A Battery Management System (BMS) may be disposed in a space 150 between the first end plate 124 and the battery module 110. The BMS may be configured to perform monitoring, balancing, and control of the battery pack 101. Monitoring of the battery pack 101 may include monitoring of voltages and currents of specific nodes inside the plurality of battery modules 110, and monitoring of a temperature distribution at set positions inside the battery pack 101. A venting passage 124a may be provided inside the first end plate 124.

A refrigerant inlet 131 and an outlet 132 may be installed on the second end plate 126.

An upper cover plate 130 may be located at an upper end of the pack housing 120. The upper cover plate 130 is a member for covering the battery module 110, and a cooling flow path 133 may be formed therein. The upper cover plate 130 may be attached to an upper surface of the battery module 110, and may be thermally coupled to the battery module 110. For example, the upper cover plate 130 may be attached to the upper surface of the battery module 110 through a thermally conductive adhesive layer interposed between the upper cover plate 130 and the upper surface of the battery module 110. For example, the thermally conductive adhesive layer may include a Thermal Interface Material (TIM).

The upper cover plate 130 may have a cooling flow path 133 configured to allow a fluid to flow, and may cool the battery module 110 by a refrigerant passing through the cooling flow path 133. The cooling flow path 133 may define a passage for a fluid. The cooling flow path 133 may be connected to the refrigerant inlet 131 and the outlet 132 on an outer side of the end plates 124, 126. The cooling flow path 133 may have a single path extending from the refrigerant inlet 131 to the outlet 132. While the fluid flows along the cooling flow path 133, cooling of the battery cell assembly 10 may be performed. For example, the upper cover plate 130 may be manufactured by bonding two plates, and the cooling flow path 133 may include a space defined between the two plates. That is, the cooling flow path 133 may be located inside the upper cover plate 130. The fluid may include cooling water or a refrigerant.

The upper cover plate 130, the base plate 121, the side plates 123, 125, and the end plates 124, 126 together form a predetermined space 127 capable of accommodating the battery module 110.

A venting channel plate 140 may be disposed at a lower part of the pack housing 120. The venting channel plate 140 is installed below the base plate 121 of the pack housing 120. The venting channel plate 140 may have a plurality of opening parts 141 communicating with the venting slots 122 of the base plate 121. The venting channel plate 140 has a venting channel 142 capable of guiding high-temperature gas in a predetermined direction. The venting channel plate 140 may be a channel that continuously extends with ridges and valleys when viewed in the Y direction.

FIGS. 7 and 8 show a gas flow in a venting passage in the battery pack.

Referring to FIGS. 7 and 8, the venting passage of the battery pack 101 includes: a plurality of connecting venting passages 129 formed on one side end of the base plate 121; an internal venting passage 123a of the first side plate 123 located at the plurality of connecting venting passages 129; an internal venting passage 124a of the first end plate 124 connected to the first side plate 123; an internal venting passage 125a of the second side plate 125 connected to the first end plate 124; and a venting device 128.

In the battery pack 101 of the present disclosure, when heat or flame is generated in any one of the battery cells B in the battery module 110, the venting cut line 114 of the module frame 112 located at a position facing the battery cell B is opened, and as shown in FIG. 8, high-temperature gas and the like proceed through the venting slot 122 of the base plate 121 to the opening part 141 of the venting channel plate 140 and move laterally along the channel space 142 of the venting channel plate 140.

Thereafter, gas existing at the lower part of the base plate 121 may move to the internal venting passage 123a of the first side plate 123 through the connecting venting passage 129 provided on a side part of the base plate 121, and then proceed to the internal venting passage 125a of the second side plate 125 via the internal venting passage 124a of the first end plate 124, and finally be discharged to the outside through the venting device 128.

Accordingly, in the battery pack 101 of the present disclosure, the venting passage extends significantly long along the periphery of the pack housing 120 to guide gas flow in a predetermined direction, which may be very useful for preventing thermal propagation.

### (Second Embodiment)

As examined in the first embodiment, the battery pack 101 of the present disclosure has a so-called upper cooling and lower venting structure, in which the cooling flow path 133 is provided at an upper part and the venting passage is included at a lower part. In the second embodiment, a battery system 100 including a battery pack stack 100A may be provided by optimizing the upper cooling and lower venting technology of such a battery pack 101.

The battery system 100 according to the second embodiment includes the battery pack stack 100A in which a plurality of battery packs 101, 102, 103, 104, each having the cooling flow path 133 at an upper part and including the venting passage at a lower part as in the first embodiment, are stacked vertically. Although the second embodiment illustrates a structure in which four battery packs 101 to 104 are stacked, the number of battery packs is not limited thereto.

The basic configuration of the second to fourth battery packs 102 to 104 of the battery pack stack 100A is the same as that of the first battery pack 101. However, in the lowermost battery pack 104 of the battery pack stack 100A, a lower plate 160 may be further disposed below the venting channel plate.

In the battery pack stack 100A, a venting passage of an upper battery pack contacts a cooling flow path of a lower battery pack adjacent directly below. For example, the venting passage of the first battery pack 101 at the uppermost layer contacts the cooling flow path of the second battery pack 102 at the lower layer adjacent directly below. Likewise, the venting passage of the second battery pack 102 at the intermediate layer contacts the cooling flow path of the third battery pack 103 at the lower layer adjacent directly below. In addition, the venting passage of the third battery pack 103 at the intermediate layer contacts the cooling flow path of the fourth battery pack 104 at the lowermost layer adjacent directly below.

In addition, in the battery pack stack 100A, the venting channel plate 140 of the upper battery pack 101 contacts an upper cover plate 130_2 of the lower battery pack 102 adjacent directly below.

Each base plate of the plurality of battery packs 101 to 104 may be thinner than the lower plate 160 of the lowermost battery pack 104.

According to the battery system 100 of the present disclosure, when thermal runaway occurs in any one battery pack of the battery pack stack 100A, for example, the second battery pack 102, high-temperature gas transferred downward from the base plate 121 contacts the cooling flow path of the upper cover plate 130_3 of the third battery pack 103, thereby being rapidly cooled and discharged through a long venting passage such as the internal venting passage of the side plate and the internal venting passage of the end plate. Therefore, since the battery system 100 of the present disclosure has a multi-surface cooling structure that simultaneously performs cooling on surfaces of the plurality of battery packs 101 to 104, thermal propagation between the battery cells B can be effectively delayed and suppressed. Accordingly, heat generation deviation and temperature deviation of the battery cells B and the battery modules 110 can be reduced, and temperature can be controlled more uniformly, thereby improving safety and reliability of the battery pack.

### (Third Embodiment)

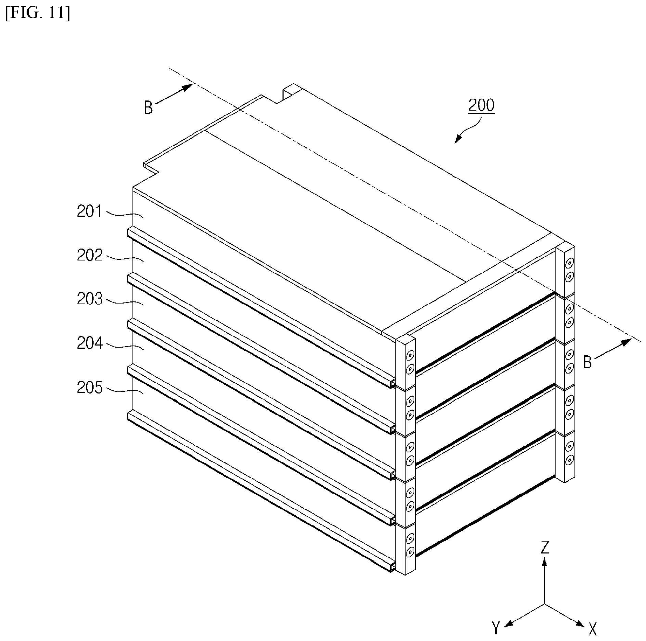

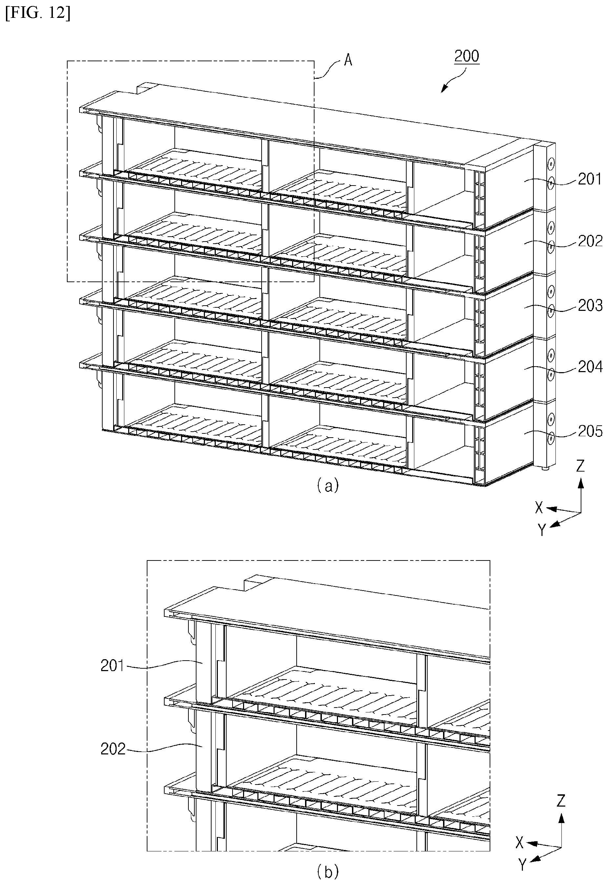

FIG. 11 is a perspective view of another battery system 200 in which a plurality of battery packs of FIG. 1 are stacked, as viewed from another direction. FIG. 12a is a perspective view taken along line B-B of FIG. 11, and FIG. 12b is an enlarged view of portion A of FIG. 12a.

Referring to the drawings, the battery system 200 according to the third embodiment is identical to the battery system 100 according to the second embodiment except that five battery packs 201, 202, 203, 204, 205 are stacked, and thus redundant description will be omitted.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery system comprising:
a battery pack having a cooling flow path at an upper part and a venting passage at a lower part; and
a battery pack stack in which a plurality of the battery packs are stacked vertically.

2. The battery system of claim 1, wherein
the battery pack comprises:
a battery module comprising a plurality of battery cells; and
a pack housing in which the battery module is accommodated.

3. The battery system of claim 2, wherein
the battery module comprises the plurality of battery cells and a module frame accommodating the plurality of battery cells.

4. The battery system of claim 3, wherein
a venting cut line is further provided on a bottom surface of the module frame.

5. The battery system of claim 2, wherein
the pack housing comprises:
a base plate located on a bottom of the pack housing and having a plurality of venting slots;
side plates assembled to both ends of the base plate; and
end plates assembled to the other both ends of the base plate to form a predetermined space together with the side plates.

6. The battery system of claim 5, wherein
the pack housing comprises:
an upper cover plate located at an upper part of the pack housing to cover the battery module; and
a venting channel plate located at a lower part of the pack housing.

7. The battery system of claim 6, wherein
the cooling flow path is formed in the upper cover plate.

8. The battery system of claim 6, wherein
the cooling flow path is connected to a refrigerant inlet and an outlet on an outside of the end plates.

9. The battery system of claim 6, wherein
the venting channel plate has a plurality of opening parts communicating with the venting slots of the base plate.

10. The battery system of claim 5, wherein
the venting passage comprises:
a plurality of connecting venting passages formed on one side of the base plate;
an internal venting passage of a side plate located at the plurality of connecting venting passages;
an internal venting passage of an end plate connected to the side plate; and
a venting device communicating with an internal venting passage of a side plate located at the other side end of the base plate.

11. The battery system of claim 9, wherein
the venting passage is formed on the base plate.

12. The battery system of claim 1, wherein
in the battery pack stack,
a venting passage of an upper battery pack contacts a cooling flow path of a lower battery pack adjacent directly below.

13. The battery system of claim 6, wherein
in the battery pack stack,
a venting channel plate of an upper battery pack contacts an upper cover plate of a lower battery pack adjacent directly below.

14. The battery system of claim 1, wherein
in the battery pack stack,
a lower plate is disposed on a lowermost battery pack.

15. The battery system of claim 14, wherein
the base plate is thinner than the lower plate.
